(19) Europäisches Patentamt
European Patent Office
Office européen des brevets

(11) Veröffentlichungsnummer : **0 014 755**
**B1**

(12) **EUROPÄISCHE PATENTSCHRIFT**

(45) Veröffentlichungstag der Patentschrift : **21.07.82**

(51) Int. Cl.³ : **C 01 B 25/237**, C 01 B 25/30

(21) Anmeldenummer : **79105035.4**

(22) Anmeldetag : **10.12.79**

(54) **Verfahren zur Herstellung von zinkfreien Alkaliphosphatlösungen.**

(30) Priorität : **23.12.78 DE 2855922**

(43) Veröffentlichungstag der Anmeldung : **03.09.80 (Patentblatt 80/18)**

(45) Bekanntmachung des Hinweises auf die Patenterteilung : **21.07.82 Patentblatt 82/29**

(84) Benannte Vertragsstaaten : **AT BE DE FR GB IT NL**

(56) Entgegenhaltungen :
**DE A 1 542 645**
**DE A 1 567 619**
**DE C 721 410**
**DE C 1 065 388**
**DE C 1 143 496**
**DE C 1 811 994**
**GB A 1 267 853**
**US A 3 305 305**
**US A 3 421 845**
**US A 3 993 733**

(73) Patentinhaber : **HOECHST AKTIENGESELLSCHAFT**
**Postfach 80 03 20**
**D-6230 Frankfurt/Main 80 (DE)**

(72) Erfinder : **Schrödter, Klaus, Dr.**
**Röntgenstrasse 23**
**D-5000 Köln 30 (DE)**
Erfinder : **Ehlers, Klaus-Peter, Dr.**
**Am Steinfeld 5**
**D-5042 Erftstadt (DE)**
Erfinder : **Mulder, Roelof**
**Wilgestraat 25**
**s'Gravenpolder (NL)**

EP 0 014 755 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

# Verfahren zur Herstellung von zinkfreien Alkaliphosphatlösungen

Die vorliegende Erfindung betrifft ein Verfahren zur Herstellung von zinkfreien Alkaliphosphatlösungen aus mit Zink verunreinigten Phosphorsäurelösungen, insbesondere aus Naßverfahrensphosphorsäure oder aus Alkaliphosphatlösungen, welche die sonstigen Verunreinigungen roher Naßverfahrensphosphorsäuren zumindest teilweise gefällt enthalten.

Alkaliphosphate werden technisch in der Hauptsache zu kondensierten Phosphaten, insbesondere zu Pentanatriumtriphosphat (NTPP) verarbeitet, das ein wichtiger Bestandteil nahezu aller Waschmittelsorten ist. Gewonnen werden diese Alkaliphosphate häufig durch Neutralisation von Naßverfahrensphosphorsäure, die durch naßchemischen Aufschluß von Rohphosphaten mit Mineralsäure erhalten wird. Diese Rohphosphorsäuren sind stets durch größere Mengen von Eisen-, Aluminium-, Magnesium- und Zinksalzen verunreinigt. Bei der Neutralisation der Rohsäure mit Alkalihydroxid oder -carbonat, die ein- oder mehrstufig meist bis zur Bildung des Dialkalihydrogenphosphates verläuft, wird Zink jedoch nur unzureichend entfernt. Die Phosphatsalzlösungen können dann, je nach Rohsäurequalität noch bis zu 600 ppm $Zn/P_2O_5$ enthalten.

Es ist bekannt, daß von den verschiedenen metallischen Verunreinigungen insbesondere das Zink bestimmte Eigenschaften des NTPP, z.B. das Hydrationsverhalten, negativ beeinflußt.

Alle bisher bekannten Verfahren zur Entfernung von metallischen Verunreinigungen aus Naßverfahrensphosphorsäure nach dem Fällungsprinzip beruhen darauf, daß man die zu reinigende Phosphorsäure entweder ohne oder nach einer im sauren Milieu mit Schwefelwasserstoff oder einer Sulfidlösung durchgeführten Behandlung mit Alkalien neutralisiert und die ausgefällten Verunreinigungen abtrennt.

So wird beispielsweise in der DE-C 721 410 die Ausfällung der Verunreinigungen von Naßphosphorsäuren, insbesondere des Eisens, durch Schwefelwasserstoff bzw. Alkalisulfide nach Teilneutralisation der Phosphorsäure bis zu einer Stufe, bei der etwas weniger als die Hälfte des Natriumdihydrogenphosphates in Dinatriumhydrogenphosphat (pH 6,5) übergeführt worden ist, beschrieben.

Aus dem Beispiel 1 dieser Patentschrift ist zu entnehmen, daß pro 100 kg eingesetztem $P_2O_5$ etwa 1,5 kg $Na_2S$ verbraucht werden. Dabei ist die Abreicherung der Verunreinigungen nur unvollkommen, denn nach Neutralisation und Sulfidfällung beträgt der Gehalt an Gesamtverunreinigungen noch 0,167 %, bezogen auf Lösung. Für eine vollständige Fällung wären dementsprechend weitaus größere Mengen $H_2S$ bzw. $Na_2S$ erforderlich.

Da nach diesem bekannten Verfahren das relativ teure Fällungsmittel $H_2S$ oder $Na_2S$ nicht nur zur ausschließlichen Fällung von ZnS, sondern auch zur Abtrennung des im Vergleich zum Zink gewöhnlich in 5-20-facher Menge vorhandenen Eisens verbraucht wird, ist dieses Verfahren für eine quantitative Zinkabtrennung unwirtschaftlich. Außerdem erfordert diese Arbeitsweise eine Abkühlung der Neutralisationsmaische vor Zugabe des Fällungsmittels, um noch größere Verluste an $H_2S$ wegen der Flüchtigkeit dieses Gases bei höherer Temperatur zu vermeiden. Diese Maßnahme ist apparativ aufwendig und kostspielig und verschlechtert darüber hinaus die Filtrierbarkeit der Maische.

Ferner sind eine Reihe von Verfahren vorbeschrieben (DE-C-1 065 388, DE-A 15 67 619, DE-C 1 811 994, US-A-3 305 305 und US-A-3 421 845), die sich mit der Entfernung von metallischen Verunreinigungen, wie Mangan oder Vanadium, aus Phosphorsauren Lösungen befassen und die nach ähnlichen Prinzipien arbeiten, wie sie in der genannten DE-C-721 410 beschrieben sind.

Auch in diesen Fällen wird die Sulfidverbindung einer mehr oder weniger sauren Ausgangslösung zugesetzt, wobei die Sulfidverbindung außer als Fällungsmittel für das in relativ großer Menge vorliegende Eisen, auch als Reduktionsmittel für Metallionen, welche in einer höheren Oxidationsstufe vorliegen, verbraucht wird. Zink wird bei solchen Arbeitsweisen nicht oder nur sehr unvollkommen entfernt.

Eine aus der allgemeinen analytischen Praxis bekannte Methode zur Entfernung des Zinks aus wäßrigen Lösungen ist die Fällung mit $H_2S$ oder $Na_2S$ in schwach saurem oder schwach alkalischem Milieu. Wegen der schlechten Filtrierbarkeit der aus alkalischen Lösungen gefällten Sulfidniederschläge, wird jedoch die Fällung des Zinks bevorzugt in schwach saurer Lösung durchgeführt.

Aufgabe der vorliegenden Erfindung war es nun, ein wirtschaftliches und einfaches Verfahren zur Herstellung zinkfreier Alkaliphosphatlösungen aus zinkreichen Phosphorsäure- oder Alkaliphosphatlösung zu finden.

Überraschenderweise konnte diese Aufgabe dadurch gelöst werden, daß man zur Herstellung von zinkfreien Alkaliphosphatlösungen aus mit Zink verunreinigten Phosphorsäurelösungen, insbesondere aus Naßverfahrensphosphorsäure oder aus Alkaliphosphatlösungen, welche die sonstigen Verunreinigungen roher Naßverfahrensphosphorsäuren zumindest teilweise gefällt enthalten, zunächst im Ausgangsprodukt durch Zugabe von Alkalihydroxid oder -carbonat einen pH-Wert von 8 bis 14, vorzugsweise von 9 bis 9,5, einstellt. Die dann vorliegende Suspension läßt man anschließend mit $H_2S$ oder einer Alkalisulfidlösung unter Druck sowie intensiver Durchmischung reagieren und trennt danach, unter Beibehaltung des Druckes, die gesamten Feststoffe von der gereinigten Alkaliphosphatlösung ab. Hierbei ist es ausreichend, den Schwefelwasserstoff oder das Alkalisulfid, insbesondere Natriumsulfid, in einer Menge von 150 bis 300 Mol%, bezogen auf das im Ausgangsprodukt vorliegende Zink, einzuleiten. Die Reaktion der Suspension mit dem Schwefelwasserstoff oder der Alkalisulfidlösung wird vorteilhafterweise bei einem Druck von 0,1 bis 10 bar durchgeführt, worauf man die Feststoffe mit Hilfe eines Druckfilters von der Alkaliphosphatlösung bei etwa dem gleichen Druck abtrennt. Es hat sich als sehr zweckmäßig erwiesen, den Schwefelwasserstoff oder die Alkalisulfidlösung direkt in eine oder vor einer für das Druckfilter bestimmte und unmittelbar vor diesem angebrachte Pumpe einzuleiten.

Das erfindungsgemäße Verfahren bietet mehrere Vorteile :

1. Es wird eine praktisch quantitative Ausfällung und Abtrennung des Zinks als Sulfid erreicht.

Bei einem Einsatz von 150-300 Molprozent Fällungsmittel (im allgemeinen $Na_2S$ oder $H_2S$), bezogen auf das Zink in der Lösung, enthalten die Filtrate weniger als 5 ppm Zink.

2. Das eingesetzte Fällungsmittel wird optimal zur ZnS-Fällung ausgenutzt (keine Mitfällung von FeS, keine $H_2S$-Verluste durch Entweichen des leicht flüchtigen Schwefelwasserstoffs über die Gasphase), wodurch ein niedriger Verbrauch an Fällungsmittel resultiert.

3. Es sind keine zusätzlichen Apparate und damit Investitionen erforderlich. Es können die zur Entfernung der anderen Verunreinigungen aus Naßphosphorsäuren bereits üblichen technischen Vorrichtungen verwendet werden.

Es ist besonders überraschend, daß eine quantitative Ausfällung des Zinksulfids selbst in der kurzen Verweilzeit der Fällungsmaische möglich ist, die je nach Füllvolumen des verwendeten Filters nur wenige (3-5) Minuten beträgt. Gleichermaßen überrascht die gute Filtrierbarkeit des im alkalischen Milieu gefällten Zinksulfids.

Selbst bei Anteilen von etwa 20 Gewichtsprozenten Zinksulfid am gesamten Feststoffanteil der Maische wurde keine oder eine nur geringfügige Beeinträchtigung der Filtrationsleistung beobachtet.

An den folgenden Ausführungsbeispielen soll das erfindungsgemäße Verfahren näher erläutert werden :

Beispiel 1

Bei der Reinigung einer marokkanischen Naßphosphorsäure (25,3 % $P_2O_5$, 0,15 % $Fe_2O_3$, 0,13 % $Al_2O_3$, 0,03 % Zn) werden stündlich 30 $m^3$ Säure mit 50 prozentiger Natronlauge einstufig bis zur Bildung von $Na_2HPO_4$ (pH 9) neutralisiert. Die entstandene Maische wird über zwei identische Filtrationseinheiten, bestehend aus je einem Horizontaldruckfilter (70 $m^2$ Filterfläche) und einer Kreislaufpumpe (Q = bis zu 100 $m^3$/h), filtriert. Während eine Filtrationseinheit (1A) ohne $Na_2S$-Dosierung betrieben wird, werden in der zweiten Einheit (1B) der Maische unmittelbar vor der Kreiselpumpe 8 l/$m^3$ einer 12 %igen $Na_2S$-Lösung (0,4 % $Na_2S/P_2O_5$) zugesetzt, (dies entspricht 250 Molprozent $Na_2S$, bezogen auf Zn) und dadurch mit der Maische bei einem Druck von etwa 7 bar intensiv vermischt und anschließend filtriert. Bei einem maximalen Druck von 7 bar auf beiden Filtern beträgt die Filtrationsleistung jeweils 0,2 $m^3$/h $m^2$. Der Zinkgehalt in den klaren Diphosphatfiltraten beträgt ohne Sulfidfällung (1A) 110 ppm, mit Sulfidabtrennung (1B) dagegen weniger als 5 ppm Zn.

Beispiel 2

In Abänderung von Beispiel 1B wird die $Na_2S$-Lösung nicht unmittelbar vor der kreiselpumpe, sondern in den Neutralisationsmaischebehälter eingespeist. Bei einer mittleren Verweilzeit der Maische zwischen Sulfidzugabe und Filtration von 2 Stunden (bei 90 °C) und einer $Na_2S$-Einsatzmenge von 80 l 12 %iger Lösung pro Kubikmeter Maische (4 % $Na_2S/P_2O_5$) enthält die filtrierte Dinatriumphosphatlösung noch 30 ppm Zink. Verglichen mit Beispiel 1B beträgt der Zn-Gehalt trotz der 10-fachen $Na_2S$-Menge infolge der längeren Verweilzeit das 6-fache.

Beispiel 3

Die in Beispiel 1 eingesetzte Naßphosphorsäure wird mit Natronlauge zunächst bis zur Monophosphatstufe (pH 4,5) neutralisiert und der gebildete Niederschlag abfiltriert. Dieser Niederschlag enthält bereits einen Teil des Zinks. Die als Filtrat erhaltene $NaH_2PO_4$-Lösung, die noch einen Zinkgehalt von 190 ppm aufweist, wird in einer zweiten Neutralisationsstufe bis zum Diphosphat (pH 9) neutralisiert. Während, wie im Beispiel 1, wiederum ein Teil (3A) der Neutralisationsmaische ohne $Na_2S$-Zusatz filtriert wird, (gleicher Filter- und Pumpentyp) werden in der zweiten Filtrationseinheit (3B) 250 Mol% $Na_2S$, bezogen auf das Zink, der Monophosphatlösung (0,3 % $Na_2S/P_2O_5$) in Form einer wäßrigen Lösung der Neutralisationsmaische unmittelbar vor der Kreiselpumpe zugesetzt und bei einem Druck von etwa 7 bar mit dieser vermischt. Ohne $Na_2S$-Zusatz wird bei einer Filtrationsleistung von 0,24 $m^3$ $h^{-1} \cdot m^{-2}$ eine Dinatriumphosphatlösung (3A) mit 90 ppm Zink erhalten. Mit Sulfidabtrennung sinkt die Filtrationsleistung auf 0,22 $m^3 \cdot h^{-1} \cdot m^{-2}$ ab. Das Filtrat (3B) enthält jedoch weniger als 5 ppm Zink. Ein Vergleich mit Beispiel (1B) zeigt, daß weniger Sulfid eingesetzt werden kann, wenn die Neutralisation 2-stufig durchgeführt und nach der 1. Stufe der gebildete Niederschlag abgetrennt wird.

Beispiel 4

In Abänderung von Beispiel 3B wird die durch Neutralisation der Naßphosphorsäure bis zur Monophosphatstufe und nach Filtration erhaltene $NaH_2PO_4$-Lösung (21 % $P_2O_5$, 190 ppm Zn, 160 ppm Fe) nur bis zu einem Diphosphatgehalt von 46 % neutralisiert (pH 6,5). Vor Abtrennung der Neutralisationsniederschläge werden der

Maische 0,8 % $Na_2S/P_2O_5$ in Form einer 12 %igen $Na_2S$-Lösung vor der Beschickungspumpe eines Druckfilters zugemischt. Der Druck beim Vermischen beträgt etwa 4 bar. Das klare Filtrat enthält noch 35 ppm Zink. Dies zeigt, daß bei einer Arbeitsweise innerhalb eines pH-Bereiches, wie er beispielsweise in der DE-PS 721 410 beschrieben ist, selbst bei einem höheren $Na_2S$-Zusatz, nur eine unvollkommene Abtrennung des Zn erreicht wird.

Beispiel 5

Aus einer nordafrikanischen Naßphosphorsäure wird durch zweistufige Neutralisation eine gereinigte Dinatriumphosphatlösung gewonnen (pH 9), die noch 420 ppm Zn, bezogen auf $P_2O_5$, und infolge längerer Lagerung im wesentlichen aus Magnesiumphosphaten bestehende Nachfällungsbestandteile enthält. Vor Verarbeitung der Lösung zu Natriumtriphosphat wird Zink als Zinksulfid ausgefällt und zusammen mit den Magnesiumsalzen abfiltriert. Dazu werden pro Kubikmeter Suspension 3,9 l einer 10 %igen $Na_2S$-Lösung (0,17 % $Na_2S/P_2O_5$) unmittelbar vor der zur Beschickung eines Druckfilters verwendeten Kreiselpumpe zugesetzt. Die Sulfidmenge beträgt 300 Mol%, bezogen auf das Zn. Beim Vermischen herrscht ein Druck von 3 bar. Die anschließende Filtration erfolgt bei etwa dem gleichen Druck und mit einer Leistung von 0,4 $m^3/h\ m^2$. Die klare Dinatriumphosphatlösung enthält weniger als 1 ppm Zink.

Zur Verbesserung der Filtrationseigenschaften bei Gegenwart sehr geringer Mengen bzw. bei völliger Abwesenheit von Nachfällungsbestandteilen kann der Phosphatlösung vor der Zinksulfidfällung ein Filterhilfsmittel, z.B. Aktivkohle, zugesetzt werden.

## Ansprüche

1. Verfahren zur Herstellung von zinkfreien Alkaliphosphatlösungen aus mit Zink verunreinigten Phosphorsäurelösungen, insbesondere aus Naßverfahrensphosphorsäure oder aus Alkaliphosphatlösungen, welche die sonstigen Verunreinigungen roher Naßverfahrensphosphorsäuren zumindest teilweise gefällt enthalten, dadurch gekennzeichnet, daß man

a) im Ausgangsprodukt durch Zugabe von Alkalihydroxid oder -carbonat einen pH-Wert von 8 bis 14 einstellt,

b) die dann vorliegende Suspension mit $H_2S$ oder einer Alkalisulfidlösung unter Druck sowie intensiver Durchmischung reagieren läßt und

c) unter Beibehaltung des Druckes anschließend die gesamten Feststoffe von der gereinigten Alkaliphosphatlösung abtrennt.

2. Verfahren nach Anspruch 1, dadurch gekennzeichnet, daß man einen pH-Wert von 9 bis 9,5 einstellt.

3. Verfahren nach Anspruch 1 oder 2, dadurch gekennzeichnet, daß man den Schwefelwasserstoff oder das Alkalisulfid in einer Menge von 150 bis 300 Mol%, bezogen auf das im Ausgangsprodukt vorliegende Zink, einleitet.

4. Verfahren nach einem der Ansprüche 1 bis 3, dadurch gekennzeichnet, daß man als Alkalisulfid $Na_2S$ einsetzt.

5. Verfahren nach einem der Ansprüche 1 bis 4, dadurch gekennzeichnet, daß man die Reaktion der Suspension mit dem Schwefelwasserstoff oder der Alkalisulfidlösung bei einem Druck von 0,1 bis 10 bar durchführt.

6. Verfahren nach einem der Ansprüche 1 bis 5, dadurch gekennzeichnet, daß man die Feststoffe mit Hilfe eines Druckfilters von der Alkaliphosphatlösung abtrennt.

7. Verfahren nach Anspruch 6, dadurch gekennzeichnet, daß man den Schwefelwasserstoff oder die Alkalisulfidlösung in eine für das Druckfilter bestimmte und unmittelbar vor diesem angebrachte Pumpe einleitet.

## Claims

1. Process for making alkali metal phosphate solutions free of zinc, from phosphoric acid solutions contaminated with zinc and more especially from wet-processed phosphoric acid solutions or alkali metal phosphate solutions having contaminants originating from wet-processed phosphoric acid at least partially precipitated therein, wherein

a) a pH-value within the range 8 to 14 is established in the feed material by adding alkali metal hydroxide or carbonate thereto ;

b) the resulting suspension is reacted under pressure and with thorough agitation with $H_2S$ or an alkali metal sulfide solution ; and

c) the overall quantity of solid matter constituents is separated from the purified alkali metal phosphate solution while maintaining the pressure.

2. Process as claimed in claim 1, wherein a pH within the range 9 to 9.5 is established.

3. Process as claimed in claim 1 or 2, wherein hydrogen sulfide or alkali metal sulfide is used in a proportion within the range 150 to 300 mol%, based on the zinc in the feed material.

4. Process as claimed in any of claims 1 to 3, wherein $Na_2S$ is used as the alkali metal sulfide.

5. Process as claimed in any of claims 1 to 4, wherein the suspension is reacted with hydrogen sulfide or alkali metal sulfide solution under a pressure of 0.1 to 10 bars.

6. Process as claimed in any of claims 1 to 5, wherein the solid matter constituents are separated from the alkali metal phosphate solution with the aid of a pressure filter.

7. Process as claimed in claim 6, wherein the hydrogen sulfide or alkali metal sulfide solution is introduced into a pump for the pressure filter, the pump being positioned directly upstream thereof.

## Revendications

1. Procédé de préparation de solutions de phosphates alcalins exemptes de zinc à partir de solutions d'acide phosphorique contaminées par du zinc, en particulier à partir d'un acide phosphorique préparé par voie humide ou de solutions de phosphates alcalins contenant, au moins à l'état partiellement précipité, les impuretés habituelles de l'acide phosphorique humide, caractérisé en ce que :

a) on établit dans le produit de départ un pH de 8-14, par addition d'hydroxyde ou de carbonate alcalin,

b) on fait réagir la suspension sous pression et avec agitation intense avec $H_2S$ ou une solution de sulfure alcalin et

c) on sépare la totalité des matières solides de la solution de phosphates alcalins purifiée, en maintenant la pression.

2. Procédé selon la revendication 1, caractérisé en ce que l'on établit un pH de 9-9,5.

3. Procédé selon la revendication 1 ou 2, caractérisé en ce que l'on introduit l'hydrogène sulfuré ou le sulfure alcalin en proportions de 150-300 moles%, par rapport au zinc présent dans le produit de départ.

4. Procédé selon l'une quelconque des revendications 1 à 3, caractérisé en ce que l'on utilise $Na_2S$ comme sulfure alcalin.

5. Procédé selon l'une quelconque des revendications 1 à 4, caractérisé en ce que l'on fait réagir la suspension avec l'hydrogène sulfuré ou la solution de sulfure alcalin sous une pression de 0,1 à 10 bars.

6. Procédé selon l'une quelconque des revendications 1 à 5, caractérisé en ce que l'on sépare les matières solides de la solution de phosphate alcalin à l'aide d'un filtre à pression.

7. Procédé selon la revendication 6, caractérisé en ce que l'on introduit l'hydrogène sulfuré ou la solution de sulfure alcalin dans une pompe adaptée au filtre à pression et disposée juste en amont de ce dernier.